(19) **Europäisches Patentamt European Patent Office Office européen des brevets**

(11) **EP 2 047 643 B1**

(12) **FASCICULE DE BREVET EUROPEEN**

(45) Date de publication et mention
de la délivrance du brevet:
**19.01.2011 Bulletin 2011/03**

(51) Int Cl.:
***H04W 36/14*** *(2009.01)*

(21) Numéro de dépôt: **07803899.9**

(22) Date de dépôt: **19.06.2007**

(86) Numéro de dépôt international:
**PCT/FR2007/051474**

(87) Numéro de publication internationale:
**WO 2007/148016 (27.12.2007 Gazette 2007/52)**

(54) **PROCEDÉ DE COMMUNICATION, STATIONS ÉMÉTTRICE ET RÉCEPTRICE ET PROGRAMMES D'ORDINATEUR ASSOCIÉS**

KOMMUNIKATIONSVERFAHREN, ZUGEHÖRIGE SENDE- UND EMPFANGSSTATIONEN SOWIE COMPUTERPROGRAMME

METHOD OF COMMUNICATION, ASSOCIATED SENDING AND RECEIVING STATIONS AND COMPUTER PROGRAMS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **20.06.2006 FR 0605491**

(43) Date de publication de la demande:
**15.04.2009 Bulletin 2009/16**

(73) Titulaire: **FRANCE TELECOM
75015 Paris (FR)**

(72) Inventeurs:
• **WATTEYNE, Thomas
  69003 Lyon (FR)**
• **BACHIR, Abdelmalik
  38100 Grenoble (FR)**
• **AUGE-BLUM, Isabelle
  69100 Villeurbanne (FR)**
• **Les auters inventeurs ont renoncé à leur désignation.**

(56) Documents cités:
**WO-A-03/047175   WO-A-2006/115577**

**Description**

La présente invention concerne les techniques de communication utilisées dans les réseaux de télécommunications. Elle s'applique particulièrement, mais non exclusivement, dans les réseaux ad hoc.

Les réseaux ad hoc sont des réseaux de communication dépourvus d'infrastructure fixe. Un certain nombre de stations sans fil sont équipées de moyens d'émission et/ou réception radio et de protocoles adéquats pour former les noeuds du réseau ad hoc.

Ces stations composant le réseau ad hoc peuvent être sous la forme d'ordinateurs fixes ou portables, d'ordinateurs de poche, de téléphones mobiles, de véhicules, d'appareils électroménagers, etc. Les moyens d'émission-réception peuvent aussi être associés à des objets simples tels que des capteurs ou des actionneurs. Un réseau ad hoc de capteurs permet ainsi d'effectuer de la collecte d'informations par exemple en vue de surveiller ou de contrôler des installations.

Le succès des réseaux ad hoc dépend beaucoup de la durée de vie des stations constituant les noeuds du réseau. L'économie d'énergie est un facteur crucial pour concevoir des réseaux de capteurs à grande durée de vie, notamment parce que, d'une part les noeuds sont généralement alimentés par des piles dont le remplacement ou le rechargement est généralement coûteux et difficile, voire impossible et parce que d'autre part, les sources d'énergie telles que les piles ou les batteries sont des sources de pollution.

Les réseaux ad hoc ont des contraintes de fonctionnement sévères. Tout d'abord, il n'existe pas d'infrastructure fixe. Les noeuds doivent coopérer pour permettre les échanges. Par ailleurs, la structure du réseau varie : de nouveaux noeuds peuvent intégrer le réseau, tandis que des noeuds disparaissent, notamment lorsqu'ils ne disposent plus de réserve d'énergie. Lorsque des données doivent être envoyées d'un noeud à un noeud destinataire final, les données sont transférées via plusieurs sauts successifs entre des noeuds intermédiaires, chaque noeud intermédiaire étant à portée radio du noeud précédent et du noeud suivant.

Il est connu du document WO 03/047175 un mécanisme dit de back-off mis en oeuvre par un noeud d'un réseau ad-hoc pour tester un canal radio en vue d'émettre des données. Si, lors du test, le canal radio s'avère occupé, le noeud attend un certain délai pour le tester à nouveau. Le délai est augmenté exponentiellement au fur et à mesure des tests successifs, ce qui évite les phénomènes de collision.

Pour permettre notamment à chaque noeud, susceptible d'émettre des données, d'adresser ces données à un noeud qui d'une part se trouve à portée radio du noeud émetteur et d'autre part est le plus adéquat pour être le prochain noeud intermédiaire à recevoir et émettre les données, chaque noeud dispose d'informations sur tout noeud situé à portée radio. Les noeuds situés à portée radio d'un noeud donné constituent le voisinage à 1 saut du noeud donné, qui varie en fonction de plusieurs facteurs tels que l'introduction ou la disparition de noeuds, la distance entre le noeud donné et les noeuds voisins, les puissances de transmission des noeuds, les gains et diagrammes de rayonnement des antennes respectivement associés aux noeuds, les interférences etc.

Ces informations dont chaque noeud X dispose, relatives aux noeuds de son voisinage à 1 saut, sont notamment exploitées pour définir, dans le cadre de décisions de routage, le noeud Y, parmi ceux constituant le voisinage à 1 saut du noeud X, auquel X doit adresser un message à remettre in fine à un noeud cible D.

Ces informations définissant le voisinage à 1 saut sont obtenues dans l'art antérieur à l'aide d'échanges périodiques d'informations. Chaque noeud envoie périodiquement un paquet de données nommé « HELLO » contenant son identifiant et une valeur associée à ce noeud, nommée métrique. En écoutant les paquets HELLO ainsi émis, chaque noeud X construit et maintient une table de données comprenant les identifiants des noeuds en provenance desquels le noeud X a récemment reçu un paquet HELLO et leur valeur de métrique respective. Cette table définit les noeuds composant le voisinage à 1 saut du noeud X. Lorsqu'un noeud X doit sélectionner un noeud parmi les noeuds de son voisinage à 1 saut, vers lequel transmettre des données, il réalise cette sélection en fonction de la table de données dont il dispose.

Cette technique présente néanmoins des inconvénients. Tout d'abord, l'envoi des paquets HELLO permettant la mise à jour de la table d'informations d'un noeud n'a lieu qu'à des périodes données. Les informations contenues dans la table sont donc rapidement obsolètes et les décisions prises suite à l'exploitation de ces informations ne sont donc pas toujours pertinentes.

Par ailleurs, la mise en oeuvre de ces échanges systématiques consomme une quantité d'énergie non négligeable, et ceci indépendamment de l'utilisation ou non par un noeud des informations contenues dans un nouveau paquet HELLO reçu.

Par ailleurs, ce mécanisme d'échange d'informations et d'exploitation de la table peut être vu comme appartenant à la couche de routage et ne prend pas en compte les contraintes courantes au niveau de la couche MAC, ce qui conduit à des pertes d'énergie.

Il existe donc un besoin de recueillir, au niveau d'un noeud, des informations caractérisant les noeuds de son voisinage à 1 saut, qui ne soient pas obsolètes, et de limiter les dépenses énergétiques des noeuds.

Suivant un premier aspect, l'invention propose un procédé de communication, sur un canal radio dans un réseau comportant une pluralité de noeuds de télécommunication, auxquels sont associées des valeurs respectives d'une métrique, comportant les étapes suivantes :

/a/ émettre, à partir d'un premier noeud, une requête sur le canal radio ;

/b/ suite à la réception de la requête par au moins un deuxième noeud, émettre un message de réponse avec un retard déterminé en fonction de la valeur de métrique associée audit deuxième noeud.

Un procédé selon l'invention permet ainsi au premier noeud de connaître la métrique d'un noeud ou de plusieurs noeuds se trouvant dans son voisinage à 1 saut. Ces informations sur le voisinage à 1 saut sont fournies sur requête uniquement, lorsque le premier noeud a besoin de ces informations, ce qui permet d'une part de limiter l'obsolescence de ces dernières et permet d'autre part d'économiser de l'énergie.

Dans un mode de réalisation, le retard est une fonction croissante ou une fonction décroissante de la métrique. Cette disposition permet que le premier noeud reçoive d'abord la réponse du noeud, parmi les noeuds de son voisinage à un saut, qui va particulièrement l'intéresser, par exemple parce qu'il est le plus proche du noeud cible, ou celui qui a le plus d'énergie résiduelle etc.

Dans un mode de réalisation, le premier noeud sélectionne le second noeud ayant émis le premier un message de réponse à la requête.

Dans un mode de réalisation, les noeuds sont adaptés pour écouter le canal radio par intermittence et dans un premier mode, le premier noeud passe en mode inactif d'écoute du canal radio à la fin de la réception du message de réponse émis le premier sur le canal radio, et jusqu'à la fin d'une période fixée à compter de l'émission de la requête, ladite période étant fixée en fonction de valeurs minimum et maximum de la métrique. Cette disposition permet de transmettre les données au point du voisinage à un saut le plus adapté tout en permettant au réseau d'économiser l'énergie électrique globale des noeuds.

Dans un mode de réalisation, le second noeud est adapté pour passer en mode actif d'écoute à la fin de ladite période fixée. Cette disposition permet à l'ensemble des seconds noeuds du voisinage à un saut du premier noeud ayant répondu à la requête, d'être tous à l'écoute d'un court message émis, dans le premier mode, à ce moment par le premier noeud et indiquant le second noeud sélectionné. Les seconds noeuds non sélectionnés peuvent ensuite retourner en mode inactif de réception.

Dans un mode de réalisation, le procédé comprend dans un second mode, les étapes suivantes dès la fin de l'émission du message de requête :

- émission d'un message de sélection par le premier noeud, indiquant un noeud sélectionné, suivie de l'émission d'un message de données et d'un message de brouillage en vue d'occuper le canal radio jusqu'à la fin d'une période fixée à compter de l'émission de la requête, cette période étant fixée en fonction de valeurs minimum et maximum de la métrique.

Cette disposition permet de transmettre les données au point du voisinage à un saut le plus adapté tout en permettant au réseau d'économiser l'énergie électrique globale des noeuds.

Dans un mode de réalisation, le premier noeud sélectionne un mode parmi le premier mode et le second mode en fonction d'une comparaison qu'il réalise, entre une valeur seuil fixée et la valeur de la métrique indiquée par le retard d'émission du message de réponse du second noeud.

Cette disposition permet d'adapter le mode d'échange en fonction du délai avant l'émission de la première réponse à la requête du premier noeud, ce qui a pour effet de permettre d'économiser de l'énergie.

Dans un mode de réalisation, le second noeud passe en mode actif de réception à la suite de l'émission de son message de réponse. Cette disposition lui permet de s'adapter à recevoir des données envoyées selon le second mode.

Dans un mode de réalisation, le retard déterminé avant l'émission du message de réponse par le deuxième noeud est compté à partir de la fin de l'émission de la requête, tant par le premier noeud que par le second noeud.

Suivant un deuxième aspect, l'invention propose une station émettrice/réceptrice pour former un noeud d'un réseau de télécommunications comportant une pluralité de noeuds adaptés pour communiquer sur un canal radio auxquels sont associées des valeurs respectives d'une métrique. La station comporte :

- des moyens pour émettre une requête sur le canal radio ;
- des moyens pour recevoir en provenance d'au moins un noeud un message de réponse à la requête ;
- des moyens de mesure temporelle pour mesurer un retard, relatif à l'émission dudit message de réponse à la requête et dépendant de la valeur de la métrique associée audit noeud ;
- des moyens pour sélectionner un noeud en fonction dudit retard mesuré.

Suivant un troisième aspect, l'invention propose une station émettrice/réceptrice pour former un noeud d'un réseau de télécommunication comportant une pluralité de noeuds adaptés pour communiquer sur un canal radio auxquels sont associées des valeurs respectives d'une métrique. La station comporte :

- des moyens pour recevoir une requête en provenance d'un noeud ;

- des moyens de mesure temporelle pour mesurer une durée ;

- des moyens pour émettre un message de réponse à ladite requête avec un retard déterminé en fonction de la valeur de métrique associée au noeud ayant reçu la requête et établi à l'aide des moyens de mesure temporelle.

Suivant un quatrième aspect, l'invention propose un réseau de télécommunications comportant une pluralité de noeuds adaptés pour communiquer sur un canal radio auxquels sont associées des valeurs respectives d'une métrique. Les noeuds comportent une station émettrice/réceptrice conforme aux deuxième et troisième aspects de l'invention.

Suivant un cinquième aspect, l'invention propose un programme d'ordinateur à installer dans une station émettrice/réceptrice pour former un noeud d'un réseau de télécommunications comportant une pluralité de noeuds adaptés pour communiquer sur un canal radio auxquels sont associées des valeurs respectives d'une métrique. Ce programme comprend des instructions pour mettre en oeuvre les étapes suivantes lors d'une exécution du programme par des moyens de traitement de la station :

- émettre une requête sur le canal radio ;

- recevoir en provenance d'au moins un noeud un message de réponse à la requête ;

- mesurer un retard, relatif à l'émission dudit message de réponse à la requête et dépendant de la valeur de la métrique associée audit noeud ;

- sélectionner un noeud en fonction dudit retard mesuré.

Suivant un sixième aspect, l'invention propose un programme d'ordinateur à installer dans une station émettrice/réceptrice pour former un noeud d'un réseau de télécommunications comportant une pluralité de noeuds adaptés pour communiquer sur un canal radio auxquels sont associées des valeurs respectives d'une métrique. Ce programme comprend des instructions pour mettre en oeuvre les étapes suivantes lors d'une exécution du programme par des moyens de traitement de ladite station :

- recevoir une requête en provenance d'un noeud ;

- mesurer une durée déterminée en fonction de la valeur de métrique associée au noeud ayant reçu la requête ;

- émettre un message de réponse à ladite requête avec un retard établi à l'aide de la durée mesurée.

Ainsi l'information sur le voisinage à 1 saut est requise selon l'invention à la demande, lorsqu'un noeud a besoin de cette information, et non de manière systématique. Un procédé selon l'invention permet notamment d'économiser de l'énergie, et de ne plus manipuler d'informations obsolètes.

D'autres caractéristiques et avantages de l'invention apparaîtront encore à la lecture de la description qui va suivre. Celle-ci est purement illustrative et doit être lue en regard des dessins annexés sur lesquels :

- la figure 1 est un schéma d'un réseau sans fil ad hoc dans un mode de mise en oeuvre de l'invention ;
- la figure 2 illustre l'écoute par intermittence du canal par un noeud ;
- la figure 3a représente les opérations d'émission et réception, selon l'axe des temps t, des noeuds S, A, B, et C dans un premier mode ;
- la figure 3b représente les opérations d'émission et réception, selon l'axe des temps t, des noeuds S, A, B, et C dans un second mode.

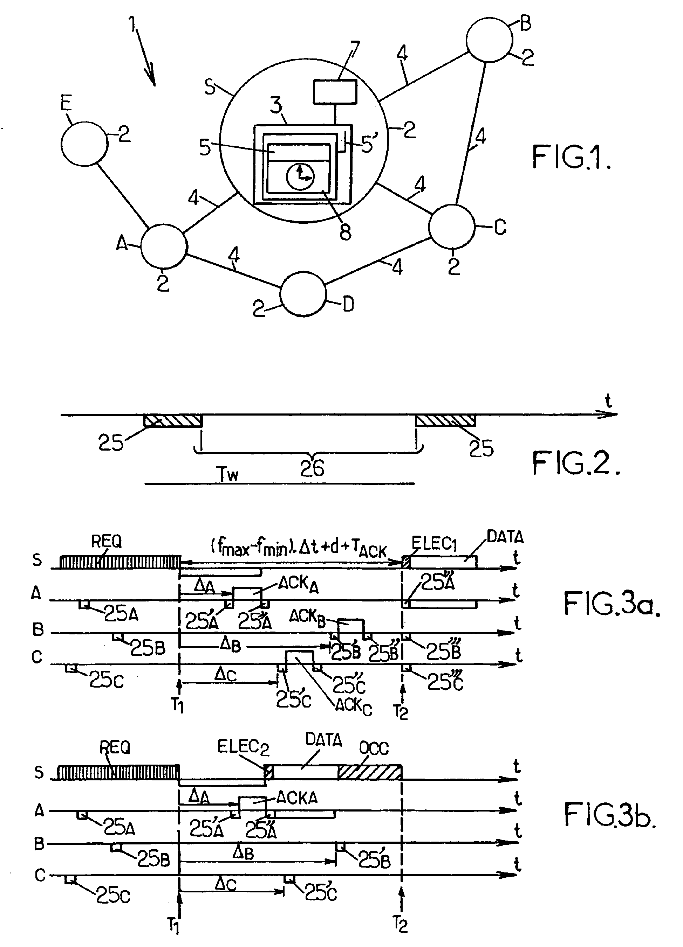

Sur la figure 1 est représentée une partie d'un réseau de télécommunications 1, dans le cas considéré, un réseau ad hoc, comportant une pluralité de stations émettrices-réceptrices 2 destinées à constituer chacune un noeud du réseau ad hoc 1.

Un noeud 2 comporte, en vue d'échanger des signaux avec un noeud voisin par l'intermédiaire d'un canal radio partagé 4, des moyens d'émission/réception 3 comprenant un module de traitement 5, relié à une antenne 5', qui assure les traitements de couche physique (couche 1 du modèle OSI) et de couche de liaison (couche 2 du modèle OSI).

Les moyens d'émission/réception 3 comportent en outre un compteur 8.

La mise sous/hors tension des moyens d'émission/réception 3 est commandée par des moyens de contrôle 7.

Ces modules ont été représentés sur la figure 1 pour le noeud S. Les noeuds A, B, C, D du réseau 1, comportent eux aussi des modules similaires.

Les différents circuits d'un noeud 2 sont alimentés en énergie électrique depuis une source (non représentée) associée au noeud 2 telle qu'une pile.

Dans la plupart des cas, les traitements numériques réalisés par le module 5 sont exécutés par un processeur central du noeud 2, sous le contrôle de programmes appropriés. L'un de ces programmes, conformément à l'invention, intervient dans le module 5.

Les noeuds composant le voisinage à 1 saut d'un noeud donné sont les noeuds se trouvant à portée radio du noeud donné, c'est-à-dire les noeuds pouvant échanger un message avec le noeud donné directement sur le canal radio 4, sans nécessiter de passer par un noeud intermédiaire relayant le message.

En référence à la figure 1, les noeuds du voisinage à 1 saut du noeud S sont les noeuds A, B et C, directement reliés au noeud S par le canal radio 4.

Un message émis sur le canal 4 incorpore une adresse du noeud qui l'a émis et une adresse du ou des noeuds auxquels il est destiné.

Chaque noeud est associé à une valeur prise par une métrique. Les noeuds A, B, C sont notamment associés respectivement aux valeurs de métrique $f_A$, $f_B$, $f_C$.

Dans le cas particulier considéré en référence aux dessins, la métrique est une fonction qui représente par exemple la distance entre le noeud auquel la métrique est associée, et un noeud cible $N_{cible}$ et $f_A=1$, $f_B=3$, $f_C=2$. La métrique de tout noeud du réseau 1 se trouve dans une plage [$f_{min}$, $f_{max}$] fixée.

Le noeud S doit faire parvenir un message de données DATA au noeud cible $N_{cible}$ Afin de déterminer à quel noeud de son voisinage à 1 saut il convient d'envoyer le message DATA, il est nécessaire que le noeud S ait accès à des informations relatives à son voisinage à 1 saut, notamment à la définition des noeuds le composant et aux informations de métrique associées. Dans l'exemple considéré, le noeud S est adapté pour sélectionner le noeud parmi ceux de son voisinage à 1 saut, qui présente la plus petite métrique.

Le module de traitement 5 du noeud S élabore alors un message, REQ, et le transmet sur le canal radio 4, via l'antenne 5' du noeud S. Le message REQ requiert la fourniture d'informations caractérisant le voisinage à 1 saut du noeud S. Il indique l'identifiant du noeud S.

Le message REQ ainsi élaboré par le noeud S comporte une séquence de m*k micro-trames (m entier strictement supérieur à 0), $T_{M1}$, $T_{M2}$ ... $T_{Mm*k}$. Chaque micro-trame $T_{Mj, j=1\ à\ m*k}$ de la séquence comporte une indication du nombre de micro-trames de la séquence restant à transmettre après la micro-trame courante $T_{Mi}$.

Dans le mode de réalisation considéré, chaque micro-trame $T_{Mj,\ j=1\ à\ m*k}$ comporte par exemple un champ indiquant que le message est une requête d'informations sur un voisinage à 1 saut, un champ indiquant l'identifiant du noeud S, et un champ indiquant le nombre de micro-trames (m*k - j) restant à transmettre.

Par ailleurs, chaque noeud 2 du réseau 1 est adapté pour être en mode actif d'écoute radio (moyens d'émission/réception allumés) à des moments de réveil (un noeud est alors dit réveillé) et être en mode inactif d'écoute radio (moyens d'émission/réception éteints) entre ces moments de réveil (un noeud est alors dit endormi), les moments de mode actif et inactif d'écoute radio de différents noeuds n'étant pas nécessairement concomitants. Les moyens de contrôle 7 sont adaptés pour commander l'endormissement et le réveil des noeuds, en commandant d'éteindre et d'allumer les moyens d'émission/réception.

Cette écoute par intermittence du canal radio permet de réduire le surcoût de l'écoute passive et de limiter la consommation d'énergie d'un noeud.

En référence à la figure 2, un noeud 2 est ainsi en mode actif d'écoute radio (radio allumée) pendant de brefs et périodiques moments d'éveil, de durée d déterminée, représentés par les rectangles 25 le long de l'axe des temps t. Deux moments d'éveil consécutifs sont espacés par de longues périodes d'inter-éveil 26, pendant lesquelles le noeud récepteur 2 est en mode inactif d'écoute radio. Le temps séparant le début de deux moments de réveil 25 consécutifs est égal à Tw.

Lors des moments de réveil 25, le noeud passe en mode actif d'écoute radio pour écouter le canal radio 4 et déterminer s'il y a un message transmis sur le canal. Si le noeud détermine que le canal est libre, il retourne à un état d'écoute radio inactive (radio éteinte) à l'issue du moment 25. En revanche, s'il détecte, lors du moment d'écoute 25, la présence d'un signal, il reste en mode d'écoute radio active pour recevoir et décoder une micro-trame.

Un noeud devant émettre un message n'émettra ce message que lorsque le canal radio 4 sera libéré.

Le message REQ tel qu'élaboré par le noeud S est d'une durée supérieure ou égale à la durée Tw séparant le début de deux moments d'éveil périodiques consécutifs des noeuds 2 du réseau 1. Ceci permet de garantir que le message REQ sera diffusé pendant un moment de réveil, de durée d, de chaque noeud à l'écoute sur le canal radio 4.

Dès la fin de la transmission du message REQ (instant T1), le noeud S démarre son compteur 8 et passe en mode d'écoute radio active du canal radio 4 en vue de détecter au moins un premier message d'acquittement d'un noeud, dans le voisinage à un saut du noeud S, ayant reçu le message REQ.

Sur les figures 3a et 3b sont représentées en fonction du temps les différents étapes en émission (zones grisées au-dessus de l'axe des temps) et en écoute (zones grisées au-dessous de l'axe des temps) des noeuds S, A, B, C dans un premier (figure 3a) et un second (figure 3b) modes d'échanges entre le noeud S et les noeuds de son voisinage à 1 saut.

Suite à l'émission de la requête REQ, en référence aux figures 3a et 3b, à l'occasion d'un moment de réveil, chaque noeud à portée radio du noeud S, c'est-à-dire chaque noeud A, B, C du voisinage à 1 saut du noeud S détecte l'émission d'un signal sur le canal radio 4, et reçoit ainsi une micro-trame du message REQ.

Ainsi le noeud A, à l'aide de son module de traitement 5, reçoit une micro-trame du message REQ lors d'un moment périodique de réveil $25_A$. Il extrait de la micro-trame du message REQ reçue, l'indication du nombre de micro-trames du message REQ restant à transmettre et déduit, en fonction de cette indication et de la durée d'une micro-trame, l'instant T1 de la fin de la transmission du message REQ par le noeud S. Il calcule également une valeur $\Delta_A= (f_A-f_{min}).\Delta t$, où $f_A$ est la valeur de la métrique associée au noeud A et $\Delta t$ une constante déterminée.

Une fois la micro-trame reçue par le noeud A, les moyens de contrôle 7 du noeud A commandent l'endormissement du noeud A. A l'instant T1, le noeud A déclenche son compteur 8. Les moyens de contrôle 7 du noeud A commandent le réveil des moyens d'émission/réception 3 du noeud A une fois que le compteur 8 a compté un délai égal à la valeur $\Delta_A$, afin de scruter le canal radio 4 pendant une période de réveil $25'_A$ de durée d. Si le canal radio 4 est libre, le noeud A, à l'aide de son module de traitement 5, émet un message d'acquittement $ACK_A$ indiquant que le noeud A a bien reçu le message REQ. Ce message d'acquittement $ACK_A$ comporte l'identifiant du noeud S et l'identifiant du noeud A.

Une fois le message d'acquittement $ACK_A$ émis, les moyens de contrôle 7 du noeud A commandent une période d'écoute active $25'_A$ de durée d, afin de scruter le canal radio 4 et détecter s'il y a transmission sur le canal 4 d'un message à son intention. Dans le cas contraire, les moyens de contrôle 7 respectifs du noeud A commandent l'endormissement du noeud A jusqu'à l'instant T2, avec T2 = T1+($f_{max}$ -$f_{min}$). $\Delta$t + d + $T_{ACK}$, où $T_{ACK}$ est la durée d'émission d'une trame d'acquittement. Les moyens de contrôle 7 commandent le réveil des moyens d'émission/réception 3 du noeud A à cet instant T2, pour une période d'écoute $25'''_A$ de durée d.

Similairement, les noeuds B et C, à l'aide de leur module de traitement 5 respectif, reçoivent une micro-trame du signal REQ lors d'un moment périodique de réveil, respectivement $25_B$ et $25_C$. Ils extraient de la micro-trame respectivement reçue, l'indication du nombre respectif de micro-trames restant à transmettre et en déduisent l'instant T1 de la fin de la transmission du message REQ par le noeud S. Ils calculent également chacun une valeur, respectivement $\Delta_B$ = ($f_B$-$f_{min}$). $\Delta$t et $\Delta_C$ = ($f_C$-$f_{min}$). $\Delta$t, où $f_B$ et $f_C$ sont les métriques associées aux noeuds B et C.

Une fois la micro-trame du signal REQ reçue, les moyens de contrôle 7 respectifs des noeuds B et C commandent l'endormissement des noeuds B et C. A l'instant T1, les noeuds B et C déclenchent leur compteur respectif 8. Leurs moyens de contrôle 7 respectifs commandent le réveil des moyens d'émission/réception des noeuds B et C une fois que le compteur a compté un délai égal à la valeur $\Delta_B$, pour le noeud B, respectivement une fois que le compteur a compté un délai égal à la valeur $\Delta_C$, pour le noeud C, afin de scruter le canal radio 4, pendant une période de réveil $25'_B$ de durée d pour le noeud B et pendant une période de réveil $25'_C$ de durée d pour le noeud C. Si le canal radio 4 est libre lors de l'écoute $25'_B$, le noeud B émet un message d'acquittement $ACK_B$ indiquant que le noeud B a bien reçu le message REQ. Ce message d'acquittement $ACK_B$ comporte l'identifiant du noeud S et l'identifiant du noeud B.

Et si le canal radio 4 est libre lors de l'écoute $25'_C$, le noeud C émet un message d'acquittement $ACK_C$ comportant l'identifiant du noeud S et l'identifiant du noeud C et indiquant que le noeud C a bien reçu le message REQ.

Une fois les signaux d'acquittement $ACK_B$ et $ACK_C$ émis, les moyens de contrôle 7 respectifs des noeuds B et C commandent une période d'écoute active $25''_B$, respectivement $25''_C$ de durée d, afin de scruter le canal radio 4 et détecter s'il y a transmission sur le canal 4 d'un message à leur intention. Dans le cas contraire, les moyens de contrôle 7 respectifs des noeuds B et C commandent l'endormissement des noeuds B et C jusqu'à l'instant T2. Leurs moyens de contrôle 7 respectifs commandent le réveil des moyens d'émission/réception des noeuds B et C à cet instant T2, pour une période d'écoute $25'''_B$, respectivement $25'''_C$, de durée d.

Les noeuds A, B, C et S sont donc synchronisés aux instants T1 et T2.

Les noeuds sont par ailleurs adaptés pour ne plus chercher à émettre de message d'acquittement, suite à la réception du message REQ, après l'instant T2 (par exemple parce que le canal 4 est occupé entre le moment où ils ont commencé à chercher à l'émettre et l'instant T2) déterminé en fonction du message REQ comme décrit ci-dessus.

Puis le noeud S, qui écoute le canal radio 4 depuis l'émission du message REQ, reçoit le premier message d'acquittement émis par un noeud, ici le message d'acquittement $ACK_A$ du noeud A (la métrique $f_A$, associée au noeud A étant, dans le mode de réalisation considéré, la métrique la plus faible parmi celles associées aux noeuds du voisinage à 1 saut du noeud S). L'information alors donnée par le compteur 8 du noeud S est d + $\Delta_A$ = d+ $f_A$. $\Delta$t. Connaissant $\Delta$t et d, le noeud S en déduit la valeur $f_A$ de la métrique associée au noeud A, repéré par l'identifiant indiqué dans le message d'acquittement $ACK_A$.

Le noeud S accède ainsi à l'information que le noeud A est un noeud de son voisinage à 1 saut et qu'en outre, le noeud A est le noeud de son voisinage à 1 saut présentant la plus petite valeur de métrique.

Puis le noeud S compare l'information (d+$\Delta_A$) avec une valeur seuil déterminée $\Delta_{seuil}$ = $f_{seuil}$.$\Delta$t.

Avantageusement,

$$f_{seuil} = (f_{max}.\Delta t + (2 - N)T_{ACK} + 2d)\frac{1}{\Delta t}, \quad \text{où}$$

N est le nombre moyen dans un voisinage à 1 saut d'un noeud, ledit noeud compris.

Si d+$\Delta_A$ ≤ $\Delta$seuil, les moyens de contrôle 7 du noeud S commandent l'endormissement du noeud S jusqu'à l'instant T2, comme représenté sur la figure 3a.

Lorsque les noeuds B et C émettent leur message d'acquittement respectif $ACK_B$ et $ACK_C$, aux instants T1 + d + $\Delta_B$ et T1 + d + $\Delta_C$, le noeud S ne les reçoit donc pas.

A l'instant T2, les moyens de contrôle 7 du noeud S commandent le réveil du noeud S. Le noeud S émet alors un message ELEC1 informant que le noeud A, repéré par son identifiant, a été choisi par le noeud S, suivi du message de données DATA.

Le message ELEC1 est reçu par les noeuds A, B et C du voisinage à 1 saut du noeud S, puisqu'ils sont alors en période d'écoute active $25_A'''$, $25_B'''$, $25_C'''$. Ce message indiquant que le noeud élu est le noeud A, les moyens de contrôle 7 des noeuds B et C commandent leur endormissement à l'issue des période d'écoute active $25_B'''$, $25_C'''$ de durée d, tandis que le noeud A reste en écoute active au-delà de la période $25_A'''$, afin de recevoir le message de données DATA.

La somme de l'énergie consommée pour émettre les messages d'acquittement $ACK_B$ et $ACK_C$ est inférieure à l'énergie qu'aurait consommé le noeud S s'il avait continué à écouter le canal radio 4 après avoir reçu le message d'acquittement $ACK_A$ émis par le noeud A.

Si lors de l'étape de comparaison effectuée par le noeud, il est déterminé que $d+\Delta_A > \Delta seuil$, le noeud S émet alors, en référence à la figure 3b, un message ELEC2 informant que le noeud A, repéré par son identifiant, a été choisi, suivi du message de données DATA, puis d'un signal OCC de brouillage, destiné à occuper le canal radio 4 jusqu'à l'instant T2.

Le message ELEC2 est reçu par le noeud A, puisqu'il est alors en période d'écoute active $25_A'''$. Ce message indiquant que le noeud élu est le noeud A, le noeud A reste en écoute active au-delà de la période $25_A'''$, afin de recevoir le message de données DATA.

Lorsque les noeuds B et C, respectivement aux instants $T1+d+\Delta_B$ et $T1+d+\Delta_C$, vont chercher à émettre leur message d'acquittement respectif $ACK_B$ et $ACK_C$, ils vont scruter le canal radio 4 pendant les périodes de réveil $25'_B$ et $25'_C$ de durée d, et constater que le canal radio est occupé. Lorsque le canal radio sera libéré, ils ne chercheront plus à émettre leur message d'acquittement puisque l'instant T2 sera dépassé.

L'énergie que S consomme pour émettre le signal de brouillage OCC est inférieure à l'énergie que les noeuds B et C auraient consommé en émettant les signaux d'acquittement $ACK_B$ et $ACK_C$.

Le fait d'adapter ainsi le comportement du noeud S en fonction du temps correspondant au délai de réception du premier message d'acquittement permet de réaliser des économies d'énergie supplémentaires.

La métrique décrite ci-dessus représente la distance à un noeud cible. L'invention peut être mise en oeuvre relativement à d'autres métriques, par exemple représentant l'énergie résiduelle du noeud, la température mesurée, le nombre de sauts jusqu'à un noeud donné, des coordonnées géographiques (X, Y, Z) etc.

Le retard calculé par un noeud du voisinage à 1 saut du noeud S décrit ci-dessus est égal à une constante multipliée par la différence entre la valeur de la métrique associée au noeud du voisinage et la valeur minimale de la métrique. Dans un autre mode de réalisation, ce retard peut être une fonction quelconque de la métrique, convenue entre les noeuds, permettant au noeud S de recevoir d'abord la métrique d'intérêt.

Le critère de sélection appliqué par le noeud S peut être varié : distance au noeud cible la plus petite comme décrit ci-dessus, distance au noeud cible la plus grande, énergie la plus petite ou la plus grande, température mesurée la plus petite ou la plus grande etc. Ainsi avantageusement, selon les cas, le retard avec lequel le message d'acquittement est émis est une fonction croissante ou décroissante de la métrique.

Dans le cas décrit en référence aux dessins, le noeud S utilise l'information de métrique reçue pour sélectionner le noeud de son voisinage à 1 saut auquel il va adresser des données, afin que le nombre de sauts nécessaires pour acheminer les données au destinataire cible soit le minimum possible. Dans un autre mode de réalisation, l'information de métrique reçue va être exploitée pour sélectionner un noeud du voisinage présentant l'énergie résiduelle la plus élevée, et ainsi économiser l'énergie de noeuds du voisinage présentant des énergies résiduelles plus faibles.

Dans un autre mode de réalisation de l'invention, l'information de métrique obtenue est exploitée pour construire des groupes de noeuds nommés clusters, afin de rendre le routage plus efficace dans un réseau ad hoc comportant un grand nombre de noeuds.

Dans le mode de réalisation décrit, le noeud S ne reçoit pas d'information sur tout son voisinage à 1 saut, mais reçoit uniquement l'information sur le noeud le plus intéressant. Dans un autre mode de réalisation, le noeud S reçoit l'ensemble des signaux d'acquittement des noeuds de son voisinage à 1 saut, et exploite les différentes valeurs de métriques ainsi reçues.

Un avantage supplémentaire offert par l'invention est que les opérations indiquées ci-dessus sont gérées par la couche MAC, alors que dans l'art antérieur, la gestion des paquets HELLO nécessaire à la connaissance de son voisinage à 1 saut était réalisée au niveau de la couche de routage (couche 3). Il y a donc moins de perte d'énergie due au fait que les deux couches ont été conçues conjointement, il n'y a donc pas de perte d'énergie due à une mauvaise interaction entre les couches.

**Revendications**

1. Procédé de communication, sur un canal radio (4) dans un réseau (1) comportant une pluralité de noeuds (2) de télécommunications, auxquels sont associées des valeurs respectives d'une métrique, comportant les étapes suivantes :

   /a/ émettre, à partir d'un premier noeud (S), une requête (REQ) sur le canal radio ;
   /b/ suite à la réception de la requête par au moins un deuxième noeud (A), émettre un message de réponse ($ACK_A$) avec un retard déterminé en fonction de la valeur de métrique associée audit deuxième noeud.

2. Procédé selon la revendication 1, selon lequel le retard déterminé est une fonction croissante ou une fonction décroissante de la métrique.

3. Procédé selon la revendication 1 ou la revendication 2, comprenant en outre la sélection par le premier noeud (S), du second noeud (A) ayant émis le premier un message de réponse ($ACK_A$) à la requête (REQ).

4. Procédé selon l'une quelconque des revendications 1 à 3, les noeuds (2) étant adaptés pour écouter le canal radio par intermittence, selon lequel dans un premier mode, le premier noeud (S) passe en mode inactif d'écoute du canal radio (4) à la fin de la réception du message de réponse ($ACK_A$) émis le premier sur le canal radio, et jusqu'à la fin (T2) d'une période fixée à compter de l'émission de la requête, ladite période étant fixée en fonction de valeurs minimum et maximum de la métrique.

5. Procédé selon la revendication 4, selon lequel le second noeud (A) est adapté pour passer en mode actif d'écoute à la fin (T2) de ladite période fixée.

6. Procédé selon la revendication 5, comprenant les étapes suivantes dès l'issue (T2) de ladite période fixée :

   - émission d'un message de sélection (ELEC1) par le premier noeud (S), indiquant un noeud sélectionné, puis émission d'un message de données (DATA) ;
   - réception dudit message de sélection par le second noeud (A) ; puis si le noeud indiqué dans ledit message n'est pas le second noeud, passage du second noeud en mode inactif d'écoute radio, sinon maintien en mode actif d'écoute radio en vue de recevoir le message de données.

7. Procédé selon l'une quelconque des revendications précédentes, comprenant, dans un second mode, les étapes suivantes dès la fin de l'émission du message de requête (REQ) :

   - émission d'un message de sélection (ELEC2) par le premier noeud (S), indiquant un noeud sélectionné, suivie de l'émission d'un message de données (DATA) et d'un message de brouillage (OCC) en vue d'occuper le canal radio jusqu'à la fin (T2) d'une période fixée à compter de l'émission de la requête, ladite période étant fixée en fonction de valeurs minimum et maximum de la métrique.

8. Procédé selon la revendication 7 et l'une des revendications 4 à 6, selon lequel le premier noeud (S) sélectionne un mode parmi le premier mode et le second mode en fonction d'une comparaison qu'il réalise, entre une valeur seuil fixée et le retard d'émission du message de réponse ($ACK_A$) du second noeud (A).

9. Procédé selon l'une quelconque des revendications précédentes, selon lequel le second noeud (A) passe en mode actif de réception à la suite de l'émission de son message de réponse ($ACK_A$).

10. Procédé selon l'une quelconque des revendications précédentes, selon lequel le retard déterminé avant l'émission du message de réponse par le deuxième noeud est compté à partir de la fin (T1) de l'émission de la requête (REQ).

11. Station émettrice/réceptrice (S) pour former un noeud (2) d'un réseau de télécommunications (1) comportant une pluralité de noeuds adaptés pour communiquer sur un canal radio (4) auxquels sont associées des valeurs respectives d'une métrique, ladite station comportant :

   - des moyens pour émettre une requête (REQ) sur le canal radio ;
   - des moyens pour recevoir en provenance d'au moins un noeud un message de réponse à la requête ;
   - des moyens de mesure temporelle pour mesurer un retard, relatif à l'émission dudit message de réponse à la requête et dépendant de la valeur de la métrique associée audit noeud ;
   - des moyens pour sélectionner un noeud en fonction dudit retard mesuré.

12. Station émettrice/réceptrice pour former un noeud (2) d'un réseau de télécommunications (1) comportant une pluralité de noeuds adaptés pour communiquer sur un canal radio (4) auxquels sont associées des valeurs respectives d'une métrique, comportant :

   - des moyens pour recevoir une requête (REQ) en provenance d'un noeud ;
   - des moyens pour émettre un message de réponse ($ACK_A$) à ladite requête avec un retard déterminé en fonction de la valeur de métrique associée au noeud (A) ayant reçu la requête.

13. Réseau de télécommunications comportant une pluralité de noeuds (2) adaptés pour communiquer sur un canal radio (4) auxquels sont associées des valeurs respectives d'une métrique, lesdits noeuds comportant une station émettrice/réceptrice conforme à celle de la revendication 11 et à celle de la revendication 12.

**14.** Programme d'ordinateur à installer dans une station émettrice/réceptrice selon la revendication 11 pour former un noeud (2) d'un réseau de télécommunications (1) comportant une pluralité de noeuds adaptés pour communiquer sur un canal radio (4) auxquels sont associées des valeurs respectives d'une métrique, ledit programme comprenant des instructions pour mettre en oeuvre les étapes suivantes lors d'une exécution du programme par des moyens de traitement de ladite station :

   - émettre une requête (REQ) sur le canal radio ;
   - recevoir en provenance d'au moins un noeud (A) un message (ACK$_A$) de réponse à la requête ;
   - mesurer un retard relatif à l'émission dudit message de réponse à la requête et dépendant de la valeur de la métrique associée audit noeud ;
   - sélectionner un noeud en fonction dudit retard mesuré.

**15.** Programme d'ordinateur à installer dans une station émettrice/réceptrice selon la revendication 12 pour former un noeud (2) d'un réseau de télécommunications (1) comportant une pluralité de noeuds adaptés pour communiquer sur un canal radio (4) auxquels sont associées des valeurs respectives d'une métrique, ladite station étant adaptée pour communiquer avec une station selon la revendication 11, ledit programme comprenant des instructions pour mettre en oeuvre les étapes suivantes lors d'une exécution du programme par des moyens de traitement de ladite station :

   - recevoir une requête (REQ) en provenance d'un noeud (S) ;
   - émettre un message de réponse (ACK$_A$) à ladite requête avec un retard déterminé en fonction de la valeur de métrique associée au noeud (A) ayant reçu la requête.

**Claims**

**1.** Method of communication, on a radio channel (4) in a network (1) comprising a plurality of telecommunications nodes (2), with which are associated respective values of a metric, comprising the following steps:

   /a/ emitting, from a first node (S), a request (REQ) on the radio channel;
   /b/ subsequent to the receipt of the request by at least one second node (A), emitting a response message (ACK$_A$) with a delay determined as a function of the metric value associated with said second node.

**2.** Method according to Claim 1, according to which the determined delay is an increasing function or a decreasing function of the metric.

**3.** Method according to Claim 1 or Claim 2, furthermore comprising the selection by the first node (S), of the second node (A) that was the first to emit a message (ACK$_A$) in response to the request (REQ).

**4.** Method according to any one of Claims 1 to 3, the nodes (2) being adapted for listening to the radio channel intermittently, according to which in a first mode, the first node (S) switches to inactive mode of listening to the radio channel (4) at the end of the receipt of the response message (ACK$_A$) emitted first on the radio channel, and until the end (T2) of a fixed period counting from the emission of the request, said period being fixed as a function of minimum and maximum values of the metric.

**5.** Method according to Claim 4, according to which the second node (A) is adapted for switching to active listening mode at the end (T2) of said fixed period.

**6.** Method according to Claim 5, comprising the following steps right from the conclusion (T2) of said fixed period:

   - emission of a selection message (ELEC1) by the first node (S), indicating a selected node, then emission of a data message (DATA);
   - reception of said selection message by the second node (A); then if the node indicated in said message is not the second node, switching of the second node to inactive radio listening mode, otherwise maintenance in active radio listening mode with a view to receiving the data message.

**7.** Method according to any one of the preceding claims, comprising, in a second mode, the following steps right from the end of the emission of the request message (REQ):

   - emission of a selection message (ELEC2) by the first node (S), indicating a selected node, followed by the emission of a data message (DATA) and of a jamming message (OCC) with a view to occupying the radio channel until the end (T2) of a fixed period counting from the emission of the request, said period being fixed as a function of minimum and maximum values of the metric.

**8.** Method according to Claim 7 and one of Claims 4 to 6, according to which the first node (S) selects a

**9**

mode from among the first mode and the second mode as a function of a comparison that it carries out, between a fixed threshold value and the delay in emitting the response message ($ACK_A$) of the second node (A).

9. Method according to any one of the preceding claims, according to which the second node (A) switches to active mode of reception subsequent to the emission of its response message ($ACK_A$).

10. Method according to any one of the preceding claims, according to which the determined delay before the emission of the response message by the second node is counted from the end (T1) of the emission of the request (REQ).

11. Emitter/receiver station (S) for forming a node (2) of a telecommunications network (1) comprising a plurality of nodes adapted for communicating on a radio channel (4) and with which are associated respective values of a metric, said station comprising:

- means for emitting a request (REQ) on the radio channel;
- means for receiving from at least one node a message in response to the request;
- means of temporal measurement for measuring a delay, relating to the emission of said message in response to the request and dependent on the value of the metric associated with said node;
- means for selecting a node as a function of said measured delay.

12. Emitter/receiver station for forming a node (2) of a telecommunications network (1) comprising a plurality of nodes adapted for communicating on a radio channel (4) and with which are associated respective values of a metric, comprising:

- means for receiving a request (REQ) from a node;
- means for emitting a message ($ACK_A$) in response to said request with a delay determined as a function of the metric value associated with the node (A) having received the request.

13. Telecommunications network comprising a plurality of nodes (2) adapted for communicating on a radio channel (4) and with which are associated respective values of a metric, said nodes comprising an emitter/receiver station in accordance with that of Claim 11 and with that of Claim 12.

14. Computer program to be installed in an emitter/receiver station according to Claim 11 for forming a node (2) of a telecommunications network (1) comprising a plurality of nodes adapted for communicating on a radio channel (4) and with which are associated respective values of a metric, said program comprising instructions for implementing the following steps during an execution of the program by processing means of said station:

- emitting a request (REQ) on the radio channel;
- receiving from at least one node (A) a message ($ACK_A$) in response to the request;
- measuring a delay, relating to the emission of said message in response to the request and dependent on the value of the metric associated with said node;
- selecting a node as a function of said measured delay.

15. Computer program to be installed in an emitter/receiver station according to Claim 12 for forming a node (2) of a telecommunications network (1) comprising a plurality of nodes adapted for communicating on a radio channel (4) and with which are associated respective values of a metric, said station being adapted for communicating with a station according to Claim 11, said program comprising instructions for implementing the following steps during an execution of the program by processing means of said station:

- receiving a request (REQ) from a node (S);
- emitting a response message ($ACK_A$) to said request with a delay determined as a function of the metric value associated with the node (A) having received the request.

**Patentansprüche**

1. Verfahren zur Kommunikation über einen Funkkanal (4) in einem Netzwerk (1), das mehrere Telekommunikationsknoten (2) aufweist, denen jeweilige Werte einer Metrik zugeordnet sind, das die folgenden Schritte aufweist:

/a/ Senden, ausgehend von einem ersten Knoten (S), einer Anforderung (REQ) über den Funkkanal;
/b/ nach dem Empfang der Anforderung durch mindestens einem zweiten Knoten (A), Senden einer Antwortmitteilung ($ACK_A$) mit einer in Abhängigkeit von dem dem zweiten Knoten zugeordneten Metrikwert bestimmten Verzögerung.

2. Verfahren nach Anspruch 1, gemäß dem die bestimmte Verzögerung eine zunehmende Funktion oder eine abnehmende Funktion der Metrik ist.

3. Verfahren nach Anspruch 1 oder Anspruch 2, das außerdem die Auswahl, durch den ersten Knoten (S), des zweiten Knotens (A) enthält, der als erster eine Antwortmitteilung (ACK_A) auf die Anforderung (REQ) gesendet hat.

4. Verfahren nach einem der Ansprüche 1 bis 3, wobei die Knoten (2) geeignet sind, um den Funkkanal zeitweilig abzuhören, gemäß dem in einer ersten Betriebsart der erste Knoten (S) am Ende des Empfangs der als erste über den Funkkanal gesendeten Antwortmitteilung (ACK_A) und bis zum Ende (T2) einer ausgehend vom Senden der Anforderung festgelegten Periode, wobei die Periode in Abhängigkeit von minimalen und maximalen Werten der Metrik festgelegt wird, in die inaktive Abhörbetriebsart des Funkkanals (4) übergeht.

5. Verfahren nach Anspruch 4, gemäß dem der zweite Knoten (A) geeignet ist, um am Ende (T2) der festgelegten Periode in die aktive Abhörbetriebsart überzugehen.

6. Verfahren nach Anspruch 5, das die folgenden Schritte ab dem Ende (T2) der festgelegten Periode enthält:

   - Senden einer Auswahlmitteilung (ELEC1) durch den ersten Knoten (S), die einen ausgewählten Knoten angibt, dann Senden einer Datenmitteilung (DATA);
   - Empfang der Auswahlmitteilung durch den zweiten Knoten (A); dann, wenn der in der Mitteilung angegebene Knoten nicht der zweite Knoten ist, Übergang des zweiten Knotens in die inaktive Funkabhörbetriebsart, sonst Aufrechterhaltung der aktiven Funkabhörbetriebsart, um die Datenmitteilung zu empfangen.

7. Verfahren nach einem der vorhergehenden Ansprüche, das in einer zweiten Betriebsart die folgenden Schritte ab dem Ende des Sendens der Anforderungsmitteilung (REQ) enthält:

   - Senden einer Auswahlmitteilung (ELEC2) durch den ersten Knoten (S), die einen ausgewählten Knoten angibt, gefolgt vom Senden einer Datenmitteilung (DATA) und einer Verzerrungsmitteilung (OCC), um den Funkkanal bis zum Ende (T2) einer festgelegten Periode ausgehend vom Senden der Anforderung zu besetzen, wobei die Periode in Abhängigkeit von den minimalen und maximalen Werten der Metrik festgelegt wird.

8. Verfahren nach Anspruch 7 und einem der Ansprüche 4 bis 6, gemäß dem der erste Knoten (S) eine Betriebsart unter der ersten Betriebsart und der zweiten Betriebsart in Abhängigkeit von einem von ihm durchgeführten Vergleich zwischen einem festgelegten Schwellwert und der Sendeverzögerung der Antwortmitteilung (ACK_A) des zweiten Knotens (A) auswählt.

9. Verfahren nach einem der vorhergehenden Ansprüche, gemäß dem der zweite Knoten (A) nach dem Senden seiner Antwortmitteilung (ACK_A) in die aktive Empfangsbetriebsart übergeht.

10. Verfahren nach einem der vorhergehenden Ansprüche, gemäß dem die vor dem Senden der Antwortmitteilung durch den zweiten Knoten bestimmte Verzögerung ausgehend vom Ende (T1) des Sendens der Anforderung (REQ) gezählt wird.

11. Sende-/Empfangsstation (S), um einen Knoten (2) eines Telekommunikationsnetzwerks (1) zu bilden, das mehrere zur Kommunikation über einen Funkkanal (4) geeignete Knoten aufweist, denen jeweilige Werte einer Metrik zugeordnet sind, wobei die Station aufweist:

   - Einrichtungen, um eine Anforderung (REQ) über den Funkkanal zu senden;
   - Einrichtungen, um von mindestens einem Knoten eine Antwortmitteilung auf die Anforderung zu empfangen;
   - Zeitmesseinrichtungen, um eine Verzögerung zu messen, die sich auf das Senden der Antwortmitteilung auf die Anforderung bezieht und vom Wert der dem Knoten zugeordneten Metrik abhängt;
   - Einrichtungen, um einen Knoten in Abhängigkeit von der gemessenen Verzögerung auszuwählen.

12. Sende-/Empfangsstation, um einen Knoten (2) eines Telekommunikationsnetzwerks (1) zu bilden, das mehrere zur Kommunikation über einen Funkkanal (4) geeignete Knoten aufweist, denen jeweilige Werte einer Metrik zugeordnet sind, die aufweist:

   - Einrichtungen zum Empfang einer Anforderung (REQ) von einem Knoten;
   - Einrichtungen zum Senden einer Antwortmitteilung (ACK_A) auf die Anforderung mit einer Verzögerung, die in Abhängigkeit von dem Metrikwert bestimmt wird, der dem Knoten (A) zugeordnet ist, der die Anforderung empfangen hat.

13. Telekommunikationsnetzwerk, das mehrere zur Kommunikation über einen Funkkanal (4) geeignete Knoten (2) aufweist, denen jeweilige Werte einer Metrik zugeordnet sind, wobei die Knoten eine Sende-/Empfangsstation gemäß derjenigen des Anspruchs 11 und derjenigen des Anspruchs 12 aufweisen.

**14.** Computerprogramm, das in einer Sende-/Empfangsstation nach Anspruch 11 installiert werden soll, um einen Knoten (2) eines Telekommunikationsnetzwerks (1) zu bilden, das mehrere zur Kommunikation über einen Funkkanal (4) geeignete Knoten aufweist, denen jeweilige Werte einer Metrik zugeordnet sind, wobei das Programm Anweisungen enthält, um die folgenden Schritte bei einer Ausführung des Programms durch Verarbeitungseinrichtungen der Station durchzuführen:

- Senden einer Anforderung (REQ) über den Funkkanal;
- Empfang durch mindestens einen Knoten (A) einer Antwortmitteilung ($ACK_A$) auf die Anforderung;
- Messen einer Verzögerung bezüglich des Sendens der Antwortmitteilung auf die Anforderung und abhängig vom Wert der dem Knoten zugeordneten Metrik;
- Auswahl eines Knotens in Abhängigkeit von der gemessenen Verzögerung.

**15.** Camputerpragramm, das in einer Sende-/Empfangsstation nach Anspruch 12 installiert werden soll, um einen Knoten (2) eines Telekommunikationsnetzwerks (1) zu bilden, das mehrere zur Kommunikation über einen Funkkanal (4) geeignete Knoten aufweist, denen jeweilige Werte einer Metrik zugeordnet sind, wobei die Station geeignet ist, um mit einer Station gemäß Anspruch 11 zu kommunizieren, wobei das Programm Anweisungen enthält, um die folgenden Schritte bei einer Ausführung des Programms durch Verarbeitungseinrichtungen der Station durchzuführen:

- Empfang einer Anforderung (REQ) von einem Knoten (S);
- Senden einer Antwortmitteilung ($ACK_A$) auf die Anforderung mit einer Verzögerung, die in Abhängigkeit von dem Metrikwert bestimmt wird, der dem Knoten (A) zugeordnet ist, der die Anforderung empfangen hat.

FIG.1.

FIG.2.

FIG.3a.

FIG.3b.

**EP 2 047 643 B1**

## RÉFÉRENCES CITÉES DANS LA DESCRIPTION

**Documents brevets cités dans la description**

- WO 03047175 A